# EUROPÄISCHE PATENTSCHRIFT

(11) **EP 1 163 869 B1**
(45) Veröffentlichungstag und Bekanntmachung des Hinweises auf die Patenterteilung: **09.10.2002**
(21) Anmeldenummer: 01810498.4
(22) Anmeldetag: 18.05.2001
(51) Int. Cl.: A47J 31/40

(54) **Kaffeemaschine zum Aufbrühen von in einer Kapsel abgepacktem Pulverkaffee**
Coffee machine for brewing coffee from powder coffee packed in a cartridge
Machine à café pour préparer du café à partir de café en poudre contenu dans une capsule

(30) Priorität: 14.06.2000 CH 11732000
(43) Veröffentlichungstag der Anmeldung: 19.12.2001
(73) Patentinhaber: FIANARA INTERNATIONAL B.V., 1079 LH Amsterdam (NL)
(72) Erfinder: Schmed, Arthur, 8635 Oberduernten (CH)
(74) Vertreter: Rottmann, Maximilian R.

(56) Entgegenhaltungen:
- EP-A- 0 891 734
- FR-A- 2 668 451
- US-A- 5 897 899

## Beschreibung

Die Erfindung betrifft eine Kaffeemaschine nach dem Oberbegriff des Anspruchs 1.

Zum Aufbrühen von in einer Kapsel abgepacktem Pulverkaffee werden bis anhin überwiegend halbautomatische Kaffeemaschinen verwendet, bei denen die Kapsel mit dem Verschlussdeckel nach unten in einen Siebhalter eingesetzt werden müssen, welch letzterer anschliessend manuell an der Kaffeemaschine befestigt wird. Die Kaffeemaschine weist im Bereich der Portionenhalterbefestigung einen mit radialen Austrittsöffnungen für die Durchleitung von Brühwasser versehenen Brühdorn auf, der den Boden der Kapsel beim Befestigen des Siebhalters an der Kaffeemaschine durchstösst. Der Siebhalter selber ist am Boden mit einer Vielzahl von Erhebungen versehen. Diese Erhebungen durchdringen den Deckel der Kapsel und perforieren ihn, sobald Brühwasser in den Siebhalter eingeleitet wird und die Kapsel durch den hydraulischen Überdruck gegen diese Erhebungen gedrückt wird. Beim nachfolgenden Aufbrühvorgang wird das Brühwasser über den Brühdorn in die Kapsel eingeleitet, so dass es das darin aufgenommene Kaffeepulver durchströmen und über die Perforation im Deckel austreten kann. Das frisch aufgebrühte Kaffeegetränk kann über Auslässe, die auf der Unterseite des Siebhalters angeordnet sind, austreten. Eine derartige Kaffeemaschine ist beispielsweise aus der EP 0 891 734 bekannt.

Es hat sich in der Praxis gezeigt, dass sich der für das Brühwasser auslassrelevante Querschnitt des Brühdorns durch Verschmutzung relativ schnell verkleinert bzw. ganz zusetzt. Als Ursachen dafür können beispielsweise Kaffeefett, Kaffeepartikel sowie Kalk im Brühwasser angeführt werden. Mit zunehmender Verschmutzung des Brühdorns nimmt jedoch auch die Qualität des aufgebrühten Kaffeegetränks ab. Aus hydraulischer Sicht besteht eine weitere Problematik derartiger Brühdorne darin, dass innerhalb der Kapsel Totvolumen auftreten, so dass Teile des Kaffeepulvers vom Brühwasser nicht oder nur ungenügend durchspült werden.

Ein weiterer Nachteil des genannten Brühdorns besteht darin, dass dieser in der Kapsel eine relativ grosse Aufstechöffnung hinterlässt, über welche nach dem Herausziehen des Brühdorns ausgelaugtes Kaffeepulver austreten kann, welches letztendlich die Kaffeemaschine verschmutzen kann. Diese Problematik tritt insbesondere dann auf, wenn die Kapsel so in die Kaffeemaschine eingelegt wird, dass sich das aufzustechende Kapselhinterteil vertikal nach unten erstreckt, so dass das ausgelaugte Kaffeepulver nach dem Herausziehen des Brühdorns durch die Schwerkraft nach unten aus der Kapsel herausfallen kann. Ausserdem wird während des Aufbrühvorgangs, durch den Überdruck in der Kapsel, zwangsläufig Kaffeepulver über einen den Brühdorn umgebenden Spalt ausgeschwemmt.

Aus der EP 0 521 187 ist im weiteren eine Vorrichtung zum Extrahieren von geschlossenen Kartuschen bekannt. Die Vorrichtung ist mit einem Extraktionskopf versehen, der ein Gitter zum Verteilen des Brühwassers enthält. Auf der Unterseite dieses Gitters sind Vorsprünge angeordnet, die zum Aufstechen des Kartuschendeckels vorgesehen sind. Am Boden des Extraktionskopfs ist ein Abflussgitter angeordnet, das mit Erhebungen versehen ist. Diese Erhebungen dienen dem Aufstechen des Kapselbodens. Das Brühwasser wird von oben durch den Kartuschendeckel eingeleitet, welch letzterer sich unter dem Druck des Brühwasser durchbiegt, so dass zwischen dem jeweiligen Vorsprung und der damit erzeugten Öffnung ein ringförmiger Spalt entsteht, über welchen das Brühwasser in die Kartusche eindringen kann. Das aufgebrühte Kaffeegetränk soll nach unten über das Abflussgitter abfliessen. Allerdings ist nicht klar, wie das aufgebrühte Kaffeegetränk aus der Kartusche austreten kann, da sich die Erhebungen durch die erzeugten Öffnungen hindurch erstrecken und kaum ein nennenswerter Zwischenraum zwischen der jeweiligen Erhebung und der erzeugten Aufstechöffnung besteht.

Es ist daher die Aufgabe der Erfindung, eine Kaffeemaschine zum Aufbrühen von in einer Kapsel abgepacktem Pulverkaffee derart zu verbessern, dass diese einfach aufgebaut und wenig verschmutzungsanfällig ist und insgesamt sehr zuverlässig funktioniert.

Diese Aufgabe wird durch die im Kennzeichen des Anspruchs 1 angeführten Merkmale gelöst.

Durch das Vorsehen von Aufstechmitteln, die zum Aufstechen des Kapselbodens vorgesehen sind und so ausgebildet sind oder so geführt werden, dass das jeweilige Aufstechmittel die erzeugte Aufstechöffnung nicht vollständig ausfüllt, wird sichergestellt, dass ein Spalt zwischen dem jeweiligen Aufstechmittel und der Aufstechöffnung freibleibt, über den das Brühwasser unter Überdruck von aussen her in die Kapsel eingeleitet werden kann. Ausserdem kann dadurch auf einen Brühdom verzichtet werden, wodurch die vorgenannten Probleme weitestgehend vermieden werden können.

Nachfolgend wir ein Ausführungsbeispiel der Erfindung anhand von Zeichnungen näher erläutert. In diesen Zeichnungen zeigt:
Fig. 1 eine schematische Darstellung einer Brühvorrichtung sowie einer Kapsel im Ausgangszustand;
Fig. 2 die Brühvorrichtung während des Verschliessens der Kammer;
Fig. 3 die Brühvorrichtung in der Brühstellung;
Fig. 4a und 4b je eine vergrösserte Darstellung eines Aufstechorgans, und
Fig. 5 eine alternative Ausführungsform eines Aufstechorgans.

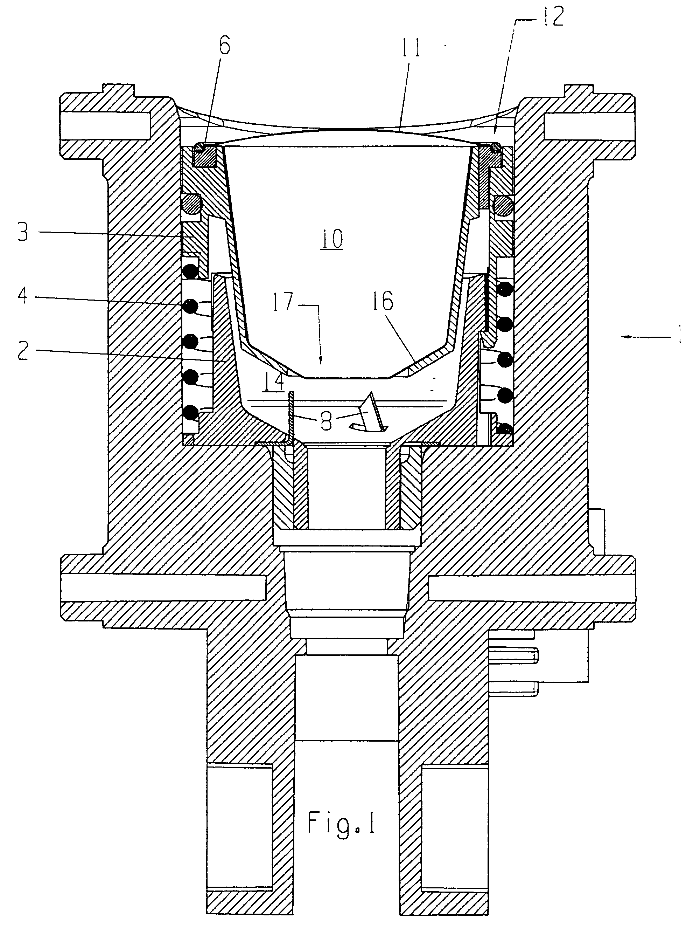

Fig. 1 zeigt eine schematisch dargestellte Brühvorrichtung, welche im vorliegenden Fall einen Teil einer vollautomatischen Kaffeemaschine zum Aufbrühen von in einer Kapsel 10 abgepacktem Pulverkaffee darstellt. Die Brühvorrichtung weist ein Brühkammergehäuse 1 auf, in dem zwei die eigentliche Brühkammer 14 begrenzende Kammerteile 2, 3 aufgenommen sind. Der Kammeroberteil 3 ist dabei in axialer Richtung gegenüber dem Kammerunterteil 2 verschiebbar angeordnet, wobei der Kammeroberteil 3 mittels einer Feder 4 vorbelastet ist, welche den Kammeroberteil 3 in die hier gezeigte obere Ruhestellung gegen einen Anschlag drückt. Zum Verschliessen der Brühkammer 14 wird das Brühkammergehäuse 1 zuerst verschwenkt und dann gegen einen aus dieser Darstellung nicht ersichtlichen Verschlusskolben hochgefahren. Die zum Bewegen des Brühkammergehäuses 1 notwendigen Antriebsmittel sind nicht dargestellt. Der Kammeroberteil 3 ist auf der Oberseite mit einer umlaufenden Dichtung 6 versehen, auf welcher die das aufzubrühende Kaffeepulver enthaltende Kapsel 10 mit ihrem Rand 12 aufliegt. Das Zuführen der Kapsel 10 in die Brühkammer 14 erfolgt über nicht näher dargestellte Mittel. Am Boden der Brühkammer 14 sind drei Aufstechorgane 8 in Form von schräggestellten Messern vorgesehen, welche die Rückseite der Kapsel 10 aufzustechen bestimmt sind. Aus dieser Schnittdarstellung sind jedoch nur zwei der drei Aufstechorgane 8 ersichtlich.

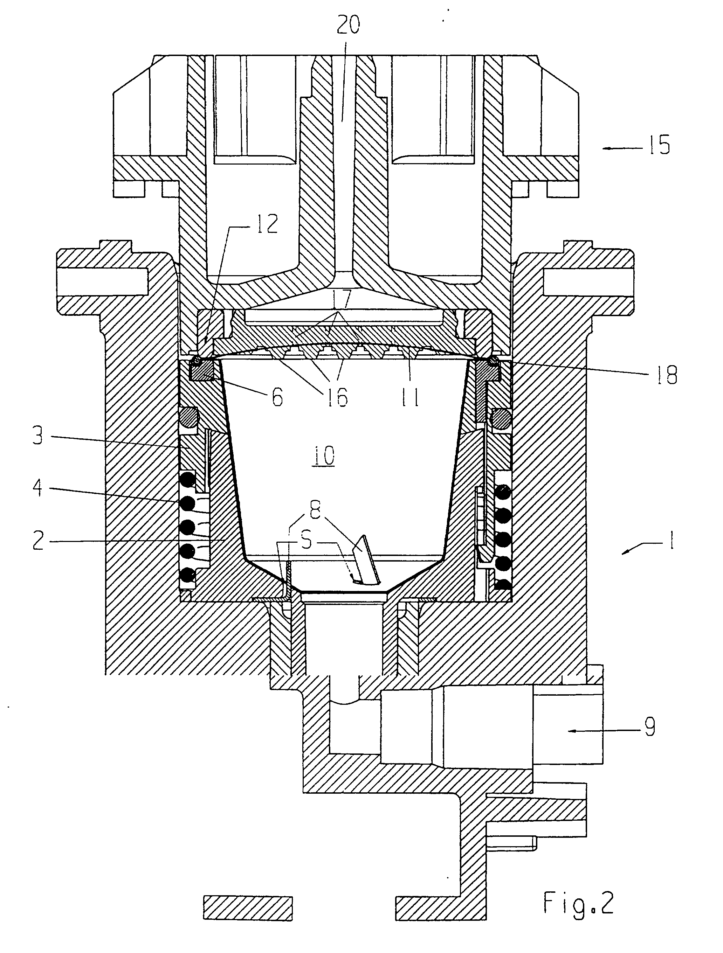

Fig. 2 zeigt die Brühvorrichtung in der Brühstellung. Dazu wurde das Brühkammergehäuse 1 verschwenkt und gegen den aus dieser Darstellung ersichtlichen Verschlusskolben 15 hochgefahren, welcher auf seiner Vorderseite mit einer Vielzahl von Erhebungen 16 sowie einer umlaufenden Dichtung 18 versehen ist. Beim Hochfahren des Brühkammergehäuses 1 fährt der Verschlusskolben 15 in das Brühkammergehäuse 1 ein, und legt sich am Brühkammeroberteil 3 an, so dass letzter entgegen der Kraft der Feder 4 mitsamt der Kapsel 10 nach unten gedrückt wird. Dabei dringen die Aufstechorgane 8 von unten in die Kapsel 10 ein und versehen diese mit Schlitzen S. Durch die Schrägstellung der messerförmigen Aufstechorgane 8 wird der Kapselboden mit länglichen Schlitzen S versehen, die länger sind als das entsprechende Aufstechorgan 8. In der oberen Endstellung des Brühkammergehäuses 1 steht die Unterseite des Brühkammeroberteils 3 an der Oberseite des Brühkammerunterteils 2 an. Zum Zuführen des Brühwassers ist ein Kanal 9 vorgesehen, der zentral in den Boden der Brühkammer 14 mündet.

In der oberen Endstellung des Brühkammergehäuses 1 liegt der Verschlusskolben 15 mit seiner Dichtung 18 dichtend am Rand 12 der Kapsel 10 auf und gleichzeitig liegt die Dichtung 6 des Brühkammeroberteils 3 dichtend an der Unterseite des Kapselrands 12 an, so dass das Kapselvorderteil gegenüber dem Kapselhinterteil hydraulisch abgedichtet ist. Wie aus der Darstellung gemäss Fig. 2 ersichtlich ist, ist die Brühkammerinnenseite der Form der Kapsel 10 angepasst, so dass kein nennenswerter Zwischenraum zwischen Kapselaussenseite und Brühkammerinnenseite besteht.

Nachdem die Kapsel auf der Rückseite aufgestochen wurde und der Kapselvorderteil gegenüber dem Kapselhinterteil hydraulisch abgedichtet ist, kann über den Kanal 9 Brühwasser zugeführt werden. Dieses Brühwasser erzeugt in der Brühkammer 14 einen hydraulischen Überdruck welcher die Kapsel nach oben gegen die Erhebungen 16 des Verschlussorgans 15 drückt, so dass die Erhebungen 16 des Verschlussorgans 15 den Deckel 11 der Kapsel 10 durchdringen und diesen perforieren. Über die von den Aufstechorganen 8 erzeugten Schlitze S kann nun das Brühwasser von unten in das Innere der Kapsel 10 einströmen. Indem das Wasser von aussen her in die Kapsel 10 eindringt, und nicht wie bis anhin über einen Brühdorn von der Innenseite her zugeführt wird, kann sichergestellt werden, dass beim Aufbrühen kein die Kaffeemaschine verschmutzendes Kaffeepulver aus der Kapsel 10 herausgespült wird. Das aufgebrühte Kaffeegetränk kann über die Öffnungen im Deckel 11 der Kapsel 10 austreten und über in den Verschlusskolben 15 eingelassene Kanäle 17 in den Auslasskanal 20 gelangen, von wo es zu einem nicht näher dargestellten Kaffeeauslass strömt.

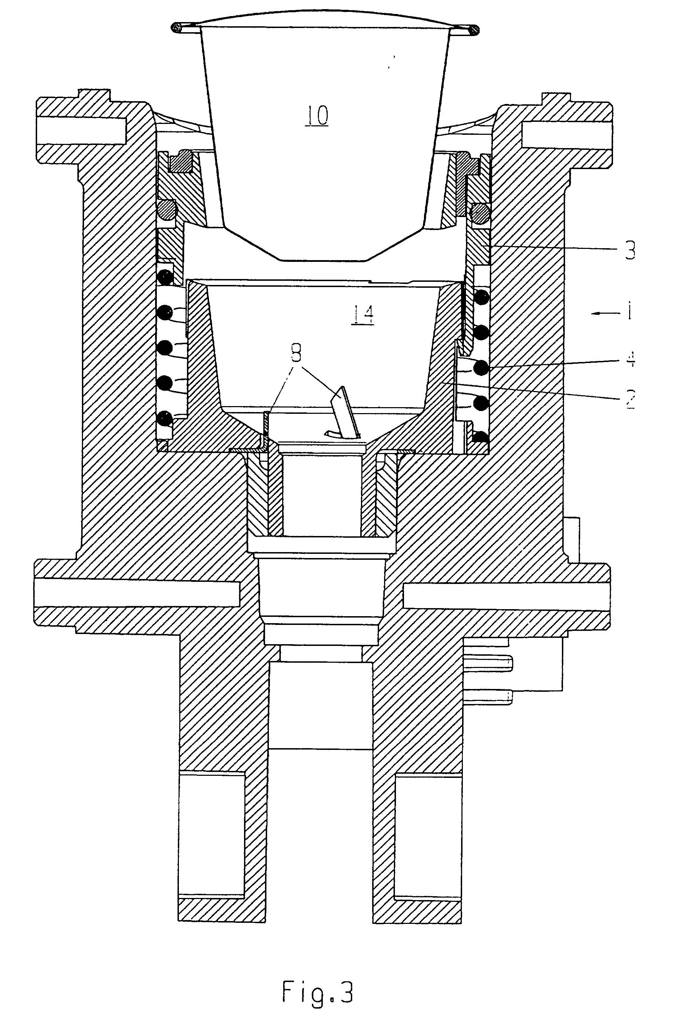

Nach dem Aufbrühen der Kaffeeportion wird das Brühkammergehäuse 1 wieder nach unten gefahren und in die Ausgangsstellung verschwenkt. Nun wird die mit ausgelaugtem Kaffeepulver versehene Kapsel 10 über nicht näher dargestellte Mittel aus dem Brühkammergehäuse 1 ausgestossen (Fig. 3) und einem Auffangbehälter zugeführt. Auch beim Entfernen der Kapsel 10 ist es vorteilhaft, wenn deren Rückseite nicht mit einer oder mehreren einen grossen Querschnitt aufweisenden Öffnung(en) versehen ist/sind, über welche beim Ausstossen der Kapsel 10 ggf. Kaffeesatz herausfallen bzw. mit in der Kapsel vorhandenem Restwasser herausfliessen kann.

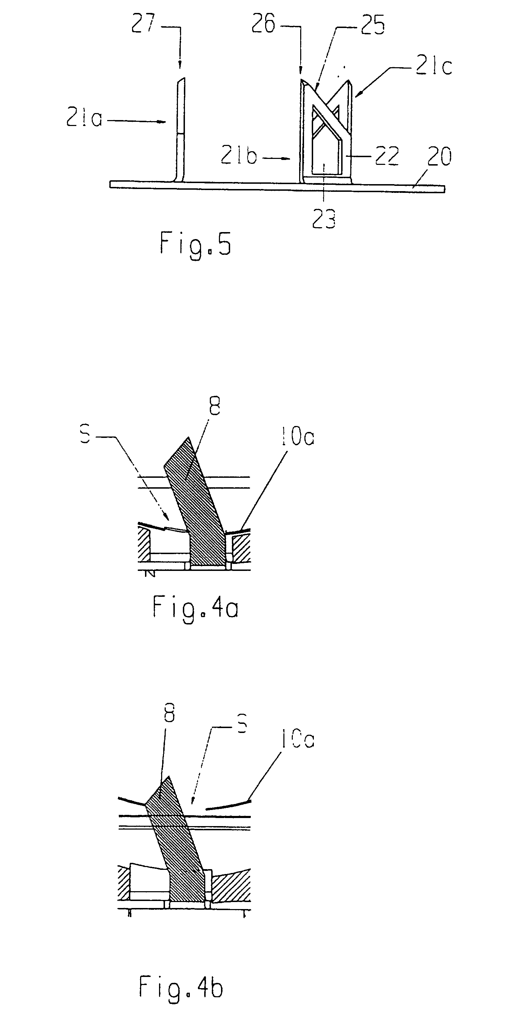

Die Figuren 4a und 4b zeigen ein Aufstechorgan 8 in vergrösserter Darstellung, wobei die Figur 4a das Aufstechorgan 8 mitsamt dem umgebenden Kapselhinterteil 10a vor dem eigentlichen Aufbrühvorgang und Fig. 4 b während des eigentlichen Aufbrühvorgangs zeigt. Durch den hydraulischen Überdruck in der Brühkammer während des Aufbrühvorgangs werden die Brühkammerteile auseinandergedrückt, was eine Relativbewegung zwischen der Kapsel und den Aufstechorganen um bis zu einem Millimeter zur Folge haben kann. Durch die Schrägstellung der Aufstechorgane 8 hat dies hat jedoch keinen Einfluss auf den für das Brühwasser zur Verfügung stehenden Eintrittsquerschnitt des Schlitzes S. Während das Brühwasser in der in der Fig. 4a gezeigten Stellung mehrheitlich über den sich auf der Vorderseite des Aufstechorgans befindlichen Teil des Schlitzes S in die Kapsel eindringen kann, gelangt das Brühwasser in der in der Fig. 4b gezeigten Stellung mehrheitlich über den sich auf der Rückseite des Aufstechorgans 8 erstreckenden Teil des Schlitzes S in die Kapsel.

Indem der Boden der Kapsel 10 an drei kreisringfömig verteilten Stellen aufgestochen wird, werden hydraulische Toträume innerhalb der Kapsel 10 weitestgehend vermieden und das in der Kapsel aufgenommene Kaffeepulver wird homogen durchströmt.

Fig. 5 zeigt eine alternative Ausführungsform von Aufstechmitteln 21a, 21b, 21c, welche auf einem ringförmigen Einsatz 20 angeordnet sind. Die Aufstechmittel 21a, 21b, 21c sind wiederum an drei kreisringfömig verteilten Stellen- angeordnet. Das jeweilige Aufstechmittel 21b besteht im wesentlichen aus einem trapezförmig gestalteten Rahmen 22, der eine schräg verlaufende obere Schneidkante 25 aufweist. Wie anhand des linken Aufstechmittels 21a ersichtlich ist, bildet die Schneidkante den oberen Abschluss einer ebenfalls schräg ausgebildeten Schneidfläche 27. Am höchsten Punkt des jeweiligen Aufstechmittels 21 b ist eine dreiecksförmig gestaltete Aufstechfläche 26 angeordnet. Der das jeweilige Aufstechmittel 21b bildende Rahmen 22 ist mit einer zentralen Aussparung 23 versehen. Wenn die Aufstechmittel die Kapsel aufgestochen haben, kann über die jeweilige Aussparung 23 Brühwasser in das Innere der Kapsel eingeleitet werden.

Es versteht sich, dass die gezeigte Brühvorrichtung beispielhaft ist und keinesfalls als abschliessend betrachtet werden kann. Beispielsweise sind anstelle von fest am Boden der Brühkammer angeordneten Aufstechorganen auch Aufstechorgane denkbar, die zum Aufstechen der Kapsel mittels eines Antriebsorganes in die Brühkammer hineinbewegt und nach dem Aufstechen wieder in eine Ruhestellung zurückbewegt werden. Eine weitere Variante besteht darin, dass die Aufstechorgane so geführt und bewegt werden, dass sie beim Einstechen eine Aufstechöffnung erzeugen, die grösser ist als sie selber. Auch die Anzahl, Anordnung und Ausführung der Aufstechorgane kann in einem breiten Bereich variieren. Beispielsweise könnten auch Aufstechorgane zum Einsatz kommen, die drachenförmig ausgebildet sind oder die Form eines Doppelkegels besitzen.

Die Vorteile der gezeigten Vorrichtung ganz allgemein wie auch im Vergleich mit bekannten, mit einem Brühdorn versehenen Vorrichtungen können folgendermassen zusammengefasst werden:
- Geringe Verschmutzung der Kaffeemaschine durch kleine Aufstechöffnungen;
- Kein Ausspülen von Kaffee;
- Kein hydraulisches Totvolumen innerhalb der Kapsel;
- Homogenes Durchspülen und Aufbrühen des Kaffeepulvers;
- Kein Zusetzen von Bohrungen zum Einleiten des Brühwassers; daher ist auch keine Reinigung derselben erfoderlich;
- Unempfindlich in Bezug auf Ausdehnungen der Brühkammer bzw. Verschieben der Kapsel, bedingt durch einen hydraulischen Überdruck in der Brühkammer;
- definierte Eintrittsöffnungen für das Brühwasser;
- Einfacher Aufbau und tiefe Herstellungskosten.

## Patentansprüche

1. Kaffeemaschine zum Aufbrühen von in einer Kapsel (10) abgepacktem Pulverkaffee, mit Aufstechmitteln (8; 21a, 21b, 21c) zum Erzeugen von mindestens einer Aufstechöffnung (S) in der Kapsel (10), **dadurch gekennzeichnet, dass** die Aufstechmittel (8; 21a, 21b, 21c) zum Aufstechen des Kapselbodens vorgesehen sind und so ausgebildet sind oder so geführt werden, dass das jeweilige Aufstechmittel (8; 21a, 21b, 21c) die erzeugte Aufstechöffnung nicht vollständig ausfüllt, und dass Mittel zum Einleiten von Brühwasser unter Überdruck von aussen her durch den freibleibenden Teil der Aufstechöffnung hindurch vorgesehen sind.

2. Kaffeemaschine nach Anspruch 1, **dadurch gekennzeichnet, dass** schräggestellte Aufstechmesser (8) vorgesehen sind, welche eine Aufstechöffnung (S) erzeugen, deren Querschnitt grösser ist als der mittlere Querschnitt des sie erzeugenden Aufstechmessers (8).

3. Kaffeemaschine nach Anspruch 1, **dadurch gekennzeichnet, dass** rahmenförmige Aufstechmittel (21a, 21b, 21c) mit einer zentralen Aussparung (23) vorgesehen sind, welch letztere zum Einleiten des Brühwassers vorgesehen ist/sind.

4. Kaffeemaschine nach Anspruch 3, **dadurch gekennzeichnet, dass** die Aufstechmittel (21a, 21b, 21c) im wesentlichen trapezförmig gestaltet sind mit einer schrägen, dem Kapselboden zugewandten Schneidkante (25).

5. Kaffeemaschine nach Anspruch 1, **dadurch gekennzeichnet, dass** die Aufstechmittel drachenförmig ausgebildet sind oder die Form eines doppelten Kegels aufweisen.

6. Kaffeemaschine nach einem der vorhergehenden Ansprüche, **dadurch gekennzeichnet, dass** eine Kammer (14) zur Aufnahme der Kapsel (10) sowie mindestens ein in die Kammer (14) hineinragendes oder hineinführbares Aufstechmittel (8) vorgesehen ist/sind, und dass im weiteren Mittel (16) zum Perforieren des Kapselvorderteils (11) und Mittel (6, 18) zum hydraulischen Abdichten des Kapselvorderteils (11) gegenüber dem Kapselhinterteil vorgesehen sind.

7. Kaffeemaschine nach einem der vorhergehenden Ansprüche, **dadurch gekennzeichnet, dass** ein manuell fixierbarer Portionenhalter vorgesehen ist, welcher mit einer Vielzahl von Erhebungen zum Perforieren des Kapselvorderteils versehen ist, wobei die Aufstechorgane an der Kaffeemaschine im Bereich der Portionenhalterbefestigung derart angeordnet sind, dass die Kapselrückseite beim Fixieren des Portionenhalters aufgestochen wird.

8. Kaffeemaschine nach einem der Ansprüche 1 bis 6, **dadurch gekennzeichnet, dass** ein Verschlussorgan (15) zum Verschliessen der Kammer (14) und zum hydraulischen Abdichten des Kapselvorderteils gegenüber dem Kapselhinterteil vorgesehen ist, wobei die Aufstechorgane (8) im Bereich des Bodens der Kammer (14) angeordnet sind und wobei Antriebsmittel zum Bewegen von die Kammer (14) begrenzenden Kammerteilen (2, 3) und/oder des Verschlussorgans (15) und/oder der Aufstechorgane (8) vorgesehen sind.

9. Kaffeemaschine nach Anspruch 8, **dadurch gekennzeichnet, dass** die die Kammer (14) begrenzenden Kammerteile (2, 3) und/oder das Verschlussorgan (15) axial bewegbar angeordnet sind, und dass durch die Axialbewegung beim Verschliessen der Kammer (14) die Kapsel (10) in Relation zu den Aufstechorganen (8) derart bewegbar ist, dass die Aufstechorgane (8) in die Kapsel (10) eindringen.

10. Kaffeemaschine nach Anspruch 8 oder 9, **dadurch gekennzeichnet, dass** ein Brühkammergehäuse (1) vorgesehen ist, welches die zwei die Kammer (14) begrenzende Kammerteile (2, 3) aufnimmt, wobei der obere Kammerteil (3) zum vertikalen Abstützen der Kapsel (10) vorgesehen ist und mittels einer Feder (4) derart vorbelastet ist, dass er beim Verschliessen der Kammer (14) entgegen der Federkraft in axialer Richtung relativ zum unteren Kammerteil (2) verschiebbar ist.

11. Kaffeemaschine nach einem Ansprüche 6 bis 10, **dadurch gekennzeichnet, dass** die innere Form der Kammer (14) im wesentlichen mit der äusseren Form der Kapsel (10) korrespondiert.

## Claims

1. Coffee machine for brewing coffee powder which is packaged in a capsule (10), having piercing means (8; 21a, 21b, 21c) for producing at least one pierced opening (S) in the capsule (10), **characterized in that** the piercing means (8; 21a, 21b, 21c) are provided for piercing the capsule base and are designed, or guided, such that the respective piercing means (8; 21a, 21b, 21c) does not completely fill the piercing opening produced, and **in that** means are provided for channelling brewing water under a positive pressure, from the outside, through the free part of the pierced opening.

2. Coffee machine according to Claim 1, **characterized in that** there are provided obliquely positioned piercing blades (8) which produce a pierced opening (S) of which the cross section is greater than the average cross section of the piercing blade (8) producing it.

3. Coffee machine according to Claim 1, **characterized in that** there are provided frame-like piercing means (21a, 21b, 21c) with a central cutout (23), the latter being provided for channelling the brewing water.

4. Coffee machine according to Claim 3, **characterized in that** the piercing means (21a, 21b, 21c) are of essentially trapezoidal configuration with an oblique cutting edge (25) directed towards the capsule base.

5. Coffee machine according to Claim 1, **characterized in that** the piercing means are of kite-shaped design or are in the shape of a double cone.

6. Coffee machine according to one of the preceding claims, **characterized in that** a chamber (14) is provided for accommodating the capsule (10) and at least one piercing means (8) which projects, or can be introduced, into the chamber (14) is provided, and **in that** also provided are means (16) for perforating the front part (11) of the capsule and means (6, 18) for hydraulically sealing the front part (11) of the capsule in relation to the rear part of the capsule.

7. Coffee machine according to one of the preceding claims, **characterized in that** there is provided a manually fixable portion holder which is provided with a multiplicity of elevations for perforating the front part of the capsule, the piercing elements being arranged on the coffee machine in the region of the portion-holder fastening such that the rear side of the capsule is pierced when the portion holder is fixed.

8. Coffee machine according to one of Claims 1 to 6, **characterized in that** a closure element (15) is provided for closing the chamber (14) and for hydraulically sealing the front part of the capsule in relation to the rear part of the capsule, the piercing elements (8) being arranged in the region of the base of the chamber (14), and drive means being provided for moving chamber parts (2, 3), which bound the chamber (14), and/or the closure element (15) and/or the piercing elements (8).

9. Coffee machine according to Claim 8, **characterized in that** the chamber parts (2, 3), which bound the chamber (14), and/or the closure element (15) are arranged in an axially movable manner, and **in that** by virtue of the axial movement when the chamber (14) is closed the capsule (10) can be moved in relation to the piercing elements (8) such that the piercing elements (8) penetrate into the capsule (10).

10. Coffee machine according to Claim 8 or 9, **characterized in that** there is provided a brewing-chamber housing (1) which accommodates the two chamber parts (2, 3), which bound the chamber (14), the top chamber part (3) being provided for supporting he capsule (10) vertically and being preloaded by means of a spring (4) such that, when the chamber (14) is closed, it can be displaced in the axial direction, counter to the spring force, relative to the bottom chamber part (2).

11. Coffee machine according to one of Claims 6 to 10, **characterized in that** the inner shape of the chamber (14) corresponds essentially with the outer shape of the capsule (10).

## Revendications

1. Machine à café destinée à la préparation du café à partir de café en poudre conditionné en capsule (10), comprenant des moyens de perçage (8 ; 21a, 21b, 21c) destinés à percer au moins un trou (S) dans la capsule (10), **caractérisée en ce que** les moyens de perçage (8 ; 21a, 21b, 21c) sont prévus pour percer le fond de la capsule et sont conçus ou réalisés de telle sorte que le moyen de perçage (8 ; 21a, 21b, 21c) concerné ne comble pas entièrement le trou percé et **en ce qu'**il est prévu des moyens destinés à introduire l'eau bouillante sous surpression à partir de l'extérieur à travers la partie restée libre du trou percé.

2. Machine à café selon la revendication 1, **caractérisée en ce qu'**il est prévu des lames de perçage (8) positionnées en oblique, lesquelles percent un trou (S) dont la section est supérieure à la section médiane de la lame de perçage (8) perçant ledit trou.

3. Machine à café selon la revendication 1, **caractérisée en ce qu'**il est prévu des moyens de perçage (21a, 21b, 21c) en forme de cadre, comportant chacun un évidement central (23), qui est prévu pour l'introduction de l'eau bouillante.

4. Machine à café selon la revendication 3, **caractérisée en ce que** les moyens de perçage (21a, 21b, 21c) sont conçus sensiblement en forme de trapèze avec une arête de coupe (25) oblique, orientée vers le fond de la capsule.

5. Machine à café selon la revendication 1, **caractérisée en ce que** les moyens de perçage sont conçus en forme de triangle ou présentent la forme d'un double cône.

6. Machine à café selon une des revendications précédentes, **caractérisée en ce qu'**il est prévu un logement (14) destiné à recevoir la capsule (10), ainsi qu'au moins un moyen de perçage (8) s'avançant en saillie ou pouvant être introduit dans le logement (14), et **en ce qu'**il est prévu, en outre, des moyens (16) destinés à perforer la partie avant (11) de la capsule et des moyens (6, 18) destinés à former l'étanchéité hydraulique de la partie avant (11) de la capsule par rapport à la partie arrière de la capsule.

7. Machine à café selon une des revendications précédentes, **caractérisée en ce qu'**il est prévu un porte-capsule à fixer manuellement, lequel est muni dune pluralité de bosses destinées à perforer la partie avant de la capsule, les organes de perçage sur la machine à café étant disposés dans la zone de la fixation du porte-capsule, de telle sorte que le côté arrière de la capsule est percé au moment de la fixation du porte-capsule.

8. Machine à café selon une des revendications 1 à 6, **caractérisée en ce qu'**il est prévu un organe de fermeture (15) destiné à obturer le logement (14) et à réaliser l'étanchéité hydraulique de la partie avant de la capsule par rapport à la partie arrière de la capsule, sachant que des organes de perçage (8) sont disposés dans la zone du fond du logement (14) et qu'il est prévu des moyens d'entraînement destinés à déplacer des éléments logement (2, 3), délimitant le logement (14), et/ou l'organe de fermeture (15) et/ou les organes de perçage (8).

9. Machine à café selon la revendication 8, **caractérisée en ce que** les éléments de logement (2, 3), délimitant le logement (14), et/ou l'organe de fermeture (15) sont disposés de manière à pouvoir se déplacer dans le sens axial et **en ce que**, par le mouvement axial pendant la fermeture du logement (14), la capsule (10) peut se déplacer par rapport aux organes de perçage (8) de telle sorte que les organes de perçage (8) pénètrent dans la capsule (10).

10. Machine à café selon la revendication 8 ou 9, **caractérisée en ce qu'**il est prévu un boîtier pour chambre d'ébullition (1), dans lequel sont logés les deux éléments de logement (2, 3), délimitant le logement (14), l'élément de logement supérieur (3) étant prévu pour l'appui vertical de la capsule (10) et étant précontraint par un ressort (4), de telle sorte qu'il peut coulisser pendant la fermeture du logement (14) dans le sens opposé à la force du ressort, dans la direction axiale par rapport à l'élément de logement inférieur (2).

11. Machine à café selon une des revendications 6 à 10, **caractérisée en ce que** la forme intérieure du logement (14) correspond sensiblement à la forme extérieure de la capsule (10).
